# FASCICULE DE BREVET EUROPEEN

(11) **EP 2 269 155 B1**
(45) Date de publication et mention de la délivrance du brevet: **22.01.2014**
(21) Numéro de dépôt: 09729081.1
(22) Date de dépôt: 16.03.2009
(51) Int. Cl.: G06F 21/00, H05K 5/02, H05K 3/28, G06K 7/00, H01H 13/803, H05K 1/02

(54) **DISPOSITIF DE PROTECTION D'UN SYSTEME ELECTRONIQUE**
SCHUTZVORRICHTUNG FÜR EIN ELEKTRONISCHES SYSTEM
PROTECTION DEVICE FOR AN ELECTRONIC SYSTEM

(30) Priorité: 21.03.2008 FR 0851843
(43) Date de publication de la demande: 05.01.2011
(73) Titulaire: Ingenico France, 92200 Neuilly Sur Seine (FR)
(72) Inventeur: ECK, Alain, F-26120 Montmeyran (FR); BONNET, Eric, F-26120 Mallissard (FR); DUBOIS, Eric, F-26120 Montvendre (FR)
(74) Mandataire: de Beaumont, Michel
(86) Numéro de dépôt international: PCT/FR2009/050427
(87) Numéro de publication internationale: WO 2009/122077

(56) Documents cités:
- WO-A-2008/056085
- DE-A1- 4 312 905
- FR-A- 2 815 733
- FR-A- 2 901 896
- US-A1- 2007 152 042

## Description

### Domaine de l'invention

La présente invention concerne un dispositif de protection d'un système électronique, par exemple un lecteur de cartes bancaires, notamment de cartes à puces, contre les intrusions.

### Exposé de l'art antérieur

Un lecteur de cartes bancaires comprend, de façon générale, un boîtier contenant un circuit imprimé sur lequel sont connectés des composants électroniques. Le lecteur comprend un clavier correspondant à une membrane souple recouvrant partiellement le circuit imprimé et au niveau de laquelle sont formées les touches d'un clavier. Chaque touche comprend généralement, du côté du circuit imprimé, une pastille conductrice. Les extrémités distinctes de deux pistes conductrices sont disposées sur le circuit imprimé à l'aplomb de chaque touche. Ces extrémités correspondent, par exemple, à des peignes entrelacés.

En l'absence d'action extérieure sur le clavier, chaque touche est dans une position de repos où elle est à distance du circuit imprimé. Lorsqu'un utilisateur exerce une pression sur une touche, celle-ci se déplace jusqu'à ce que la pastille conductrice associée établisse un contact électrique entre les extrémités des deux pistes métalliques sous-jacentes. La touche et les pistes sous-jacentes du circuit imprimé jouent donc le rôle d'un interrupteur qui est généralement ouvert et qui est fermé lorsqu'un utilisateur appuie sur la touche.

Le lecteur de cartes comprend généralement un dispositif de protection contre les intrusions constitué d'une ou de plusieurs touches factices prévues au niveau de la membrane clavier et qui ne sont pas visibles depuis l'extérieur du boîtier. Chaque touche factice est maintenue en permanence en appui contre le circuit imprimé par le boîtier du lecteur de sorte qu'elle relie électriquement en permanence deux pistes du circuit imprimé.

Lorsqu'un individu tente d'ouvrir le boîtier, la touche factice n'est plus actionnée par le boîtier et s'éloigne du circuit imprimé. La touche factice et les pistes sous-jacentes du circuit imprimé jouent donc le rôle d'un interrupteur qui est fermé lorsque le boîtier du lecteur est correctement fermé et qui est ouvert lorsque le boîtier est ouvert. L'ouverture de cet interrupteur est détectée par un circuit électronique spécifique prévu au niveau du circuit imprimé.

L'utilisation de touches factices peut ne pas offrir une protection suffisante en particulier dans le cas où une entretoise est interposée entre la membrane clavier et le circuit imprimé sous-jacent, par exemple pour jouer le rôle de diffuseur de lumière afin d'éclairer la membrane clavier depuis l'intérieur du boîtier (retroéclairage des touches). L'entretoise comprend des ouvertures permettant le passage des touches, normales et factices, de la membrane clavier. Un inconvénient d'une telle structure de lecteur est qu'il peut être relativement facile de remplir avec de la colle les ouvertures de l'entretoise associées aux touches factices de sorte que les touches factices restent collées en permanence au circuit imprimé. Le boîtier du lecteur peut alors être ouvert sans interrompre le contact entre les touches factices et le circuit imprimé.

Le document US-A-2007/152042 décrit un clavier pour lecteur de carte à puce équipé d'un guide de lumière et d'une membrane de protection vis-à-vis de l'introduction de l'aiguille d'une seringue hypodermique permettant de court-circuiter des touches de sécurité (fausses touches).

Le document DE-A-4312905 décrit un dispositif de protection d'un clavier de lecteur de carte à puce comportant une piste conductrice alimentée par un connecteur périphérique. Le dispositif est destiné à être replié autour du circuit électronique du clavier. Le recours à une piste conductrice protège le circuit électronique contre d'éventuelles intrusions. Toutefois, la présence d'un connecteur périphérique pour alimenter la piste conductrice engendre une faiblesse dans la sécurité du système.

### Résumé de l'invention

La présente invention vise un dispositif de protection contre les tentatives d'intrusion d'un système électronique comprenant un boîtier contenant une membrane clavier séparée d'un circuit imprimé par une entretoise.

Ainsi, la présente invention prévoit un système électronique comprenant :
un circuit électronique ayant une face sur laquelle sont disposées au moins deux premières pistes conductrices ;
un dispositif d'actionnement incluant au moins un premier élément d'appui ;
une entretoise interposée entre le circuit électronique et le dispositif d'actionnement et comportant au moins une ouverture recevant au moins partiellement l'élément d'appui ; et
un dispositif de protection interposé entre le circuit électronique et l'entretoise et comportant au moins une deuxième piste conductrice dont des extrémités sont respectivement reliées à des premières portions conductrices de premières régions déformables du dispositif de protection, chaque première portion étant apte à contacter l'une des premières pistes conductrices du circuit électronique pour alimenter électriquement la deuxième piste sous l'effet d'une déformation desdites premières régions.

Selon un mode de réalisation de la présente invention, lesdites premières régions déformables sont disposées hors de la périphérie du dispositif de protection.

Selon un mode de réalisation de la présente invention, lesdites premières portions conductrices sont à distance des premières pistes conductrices en l'absence d'action extérieure exercée sur la première région déformable, les premiers éléments d'appui étant adaptés à déformer les premières régions déformables pour mettre en contact les premières portions conductrices avec les premières pistes conductrices, d'où il résulte une connexion des extrémités respectives de la deuxième piste aux premières pistes conductrices.

Selon un mode de réalisation de la présente invention, le dispositif de protection comprend une zone déformée, le circuit électronique comprenant des composants électroniques recouverts par ladite zone, la deuxième piste conductrice s'étendant au niveau de ladite zone.

Selon un mode de réalisation de la présente invention, le dispositif de protection comporte en outre au moins une deuxième portion conductrice portée par une deuxième région déformable et séparée de la deuxième piste conductrice par une région isolante, la deuxième portion conductrice étant, en l'absence d'action extérieure exercée sur la deuxième région déformable, à distance des troisième et quatrième pistes conductrices portées par le circuit électronique, au moins un deuxième élément d'appui étant adapté à déformer la deuxième région déformable pour mettre en contact la deuxième portion conductrice avec les troisième et quatrième pistes conductrices, d'où il résulte une liaison électrique entre les troisième et quatrième pistes conductrices.

Selon un mode de réalisation de la présente invention, le dispositif de protection comprend un empilement de premier, deuxième et troisième films isolants, la deuxième piste conductrice étant disposée entre les premier et deuxième film isolants, le troisième film étant en contact avec le circuit électronique et comprenant des ouvertures au moins en vis-à-vis des premières pistes conductrices et dégageant les portions conductrices.

Selon un mode de réalisation de la présente invention, l'entretoise est constituée d'un matériau adapté à diffuser la lumière et comprend une première face du côté du dispositif d'actionnement et une seconde face du côté du circuit électronique, le circuit électronique comprenant au moins une source lumineuse, et l'entretoise comprenant un évidemment non traversant du côté de la seconde face et contenant ladite source lumineuse.

Selon un mode de réalisation de la présente invention, l'entretoise comprend une première face plane du côté du dispositif d'actionnement et une seconde face plane du côté du circuit électronique, la première face étant inclinée par rapport à la seconde face d'un angle compris entre 1° et 20°.

Selon un mode de réalisation de la présente invention, le dispositif d'actionnement comprend une membrane recouvrant l'entretoise, la membrane comprenant au moins une touche mobile par rapport au circuit électronique, susceptible d'être déplacée par un utilisateur et se prolongeant par un des deuxièmes éléments d'appui.

Selon un mode de réalisation de la présente invention, le dispositif d'actionnement comprend un boîtier contenant le circuit électronique, l'entretoise et le dispositif de protection, le boîtier comprenant une face interne et une portion se projetant depuis la face interne et étant adapté à maintenir les premiers éléments d'appui contre les premières régions déformables du dispositif de protection lorsque le boîtier est fermé.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 est une vue en perspective schématique d'un exemple de lecteur de cartes ;
la figure 2 est une vue en perspective d'un exemple de réalisation de certains éléments internes du lecteur de la figure 1 ;
les figures 3 et 4 sont des vues éclatées et en perspective, respectivement de trois quarts dessus et dessous, des éléments de la figure 2 ;
les figures 5 et 6 sont des vues en perspective des deux faces du dispositif de protection représenté en figure 2 ;
les figures 7 et 8 sont des coupes schématiques du lecteur de la figure 1 au niveau d'une touche du clavier à deux étapes de fonctionnement du lecteur ;
les figures 9 et 10 sont des coupes schématiques du lecteur de la figure 1 au niveau d'une touche factice respectivement lorsque le boîtier du lecteur est ouvert et fermé ;
les figures 11 et 12 sont des coupes analogues aux figures 9 et 10 au niveau d'une zone de contact d'alimentation du dispositif de protection ;
la figure 13 est une vue de dessous d'un exemple de répartition des pistes conductrices internes d'une variante du dispositif de protection représenté en figure 6 ; et
la figure 14 est une vue en perspective avec coupe des éléments représentés en figure 2.

### Description détaillée

Par souci de clarté, de mêmes éléments ont été désignés par de mêmes références aux différentes figures. De plus, seuls les éléments nécessaires à la compréhension de l'invention vont être décrits.

La présente invention prévoit, dans un système électronique comprenant un boîtier contenant un circuit imprimé séparé d'une membrane clavier par une entretoise, d'interposer un dispositif de protection entre l'entretoise et le circuit imprimé. Le dispositif de protection correspond à un circuit souple (en anglais flex circuit) constitué d'un empilement de couches. Le circuit souple comprend des éléments conducteurs du côté du circuit imprimé qui forment des interrupteurs avec des pistes conductrices du circuit imprimé. En outre, une ou plusieurs pistes conductrices sont disposées dans l'empilement de couches sous la forme d'un treillis et sont connectées à un circuit électronique de sécurité prévu au niveau du circuit imprimé. Le circuit de sécurité est adapté à détecter une modification du potentiel électrique des pistes conductrices du dispositif de protection.

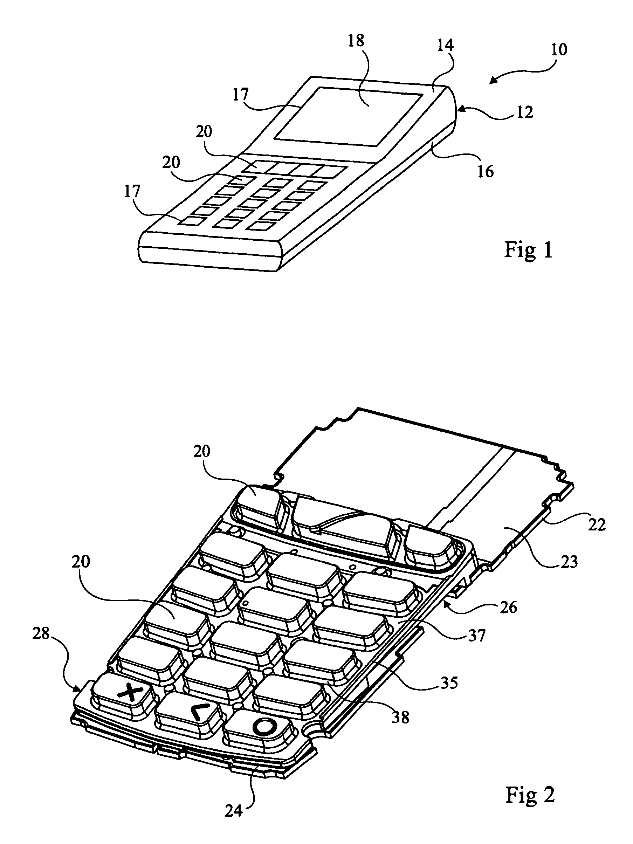

La figure 1 représente, de façon schématique, un exemple de réalisation d'un système électronique 10, par exemple un lecteur de cartes bancaires. Le lecteur 10 comprend un boîtier 12 constitué d'une portion supérieure de boîtier 14 reliée à une portion inférieure de boîtier 16. Des ouvertures 17 sont prévues au niveau de la portion supérieure de boîtier 14 pour un écran d'affichage 18 et des touches 20 appartenant, par exemple, à un clavier. En outre, une ouverture, non représentée, est prévue dans le boîtier 12 pour permettre l'introduction de cartes.

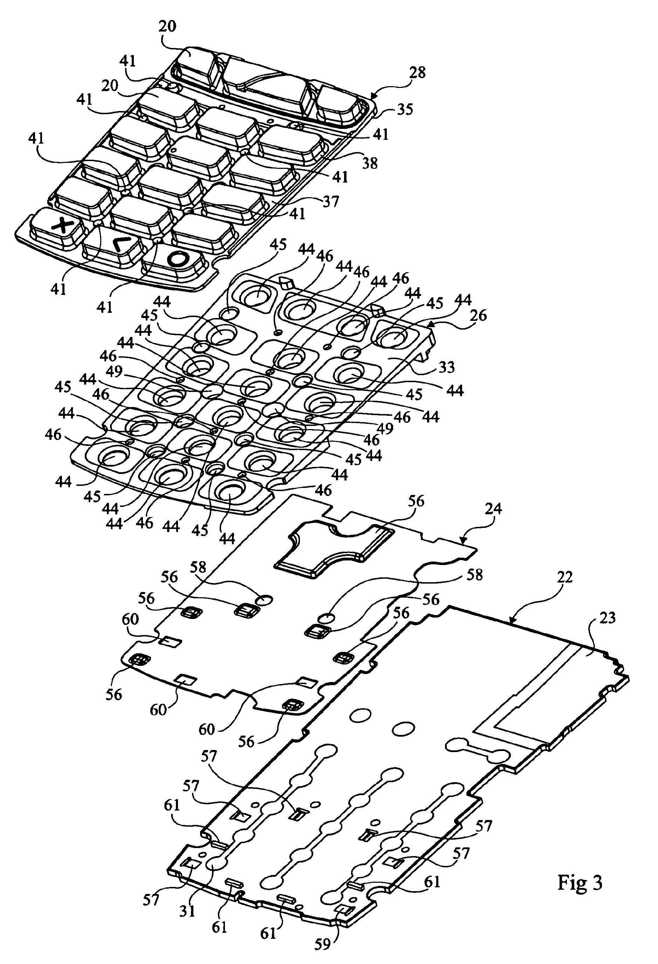

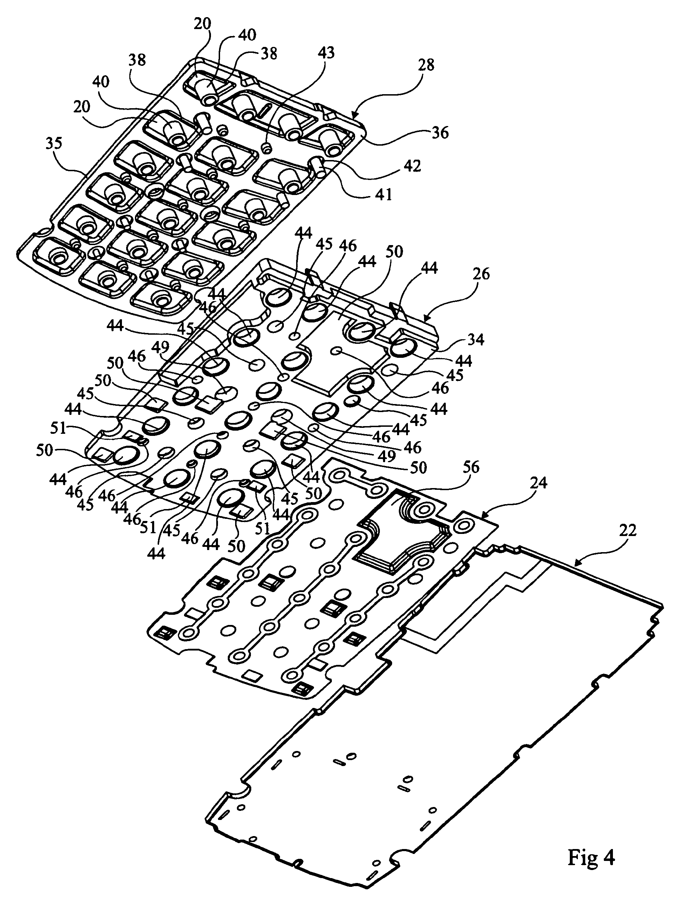

Les figures 2, 3 et 4 sont respectivement une vue d'ensemble en perspective, une vue éclatée en trois quarts dessus et une vue éclatée en trois quarts dessous d'un exemple de réalisation de certains éléments internes du lecteur 10 de la figure 1. Le lecteur 10 contient un circuit imprimé 22 sur lequel sont connectés des composants électroniques, seuls quelques composants électroniques étant représentés en figure 3. Le circuit imprimé 22 comprend une face 23 partiellement recouverte d'un dispositif de protection 24 qui sera décrit plus en détail par la suite. Dans le présent exemple de réalisation, le dispositif de protection 24 est recouvert d'une entretoise 26 jouant le rôle d'un diffuseur de lumière. L'entretoise 26 est recouverte d'une membrane souple 28 formant un clavier, au niveau de laquelle sont formées les touches 20. La membrane clavier 28 comprend dix-neuf touches 20.

Le circuit imprimé 22 comprend du côté de la face 23 des pistes conductrices, non représentées, par exemple en cuivre. On a seulement représenté par des ellipses 31 certains emplacements de pistes conductrices du circuit imprimé 22 formant des interrupteurs ou des zones de contact d'alimentation. Un interrupteur correspond, par exemple, aux extrémités distinctes de deux pistes conductrices qui correspondent, par exemple, à des peignes entrelacés. Une zone de contact d'alimentation correspond, par exemple, à un peigne.

L'entretoise 26 comprend une face supérieure 33 recouverte par la membrane clavier 28 et une face inférieure 34 reposant sur le dispositif de protection 24. Selon le présent exemple de réalisation, les faces 33 et 34 ne sont pas parallèles et forment un angle de quelques degrés, par exemple compris entre 1° et 20°, de préférence entre 2° et 6°.

La membrane clavier 28, par exemple en silicone ou en polyuréthane, comprend une base 35 ayant une face 36 reposant sur l'entretoise 26 et une face 37 orientée du côté de la portion supérieure de boîtier 14. Chaque touche 20 a une forme sensiblement parallélépipédique et est reliée à la base 35 par une lèvre périphérique amincie 38. En outre, chaque touche 20 se prolonge du côté de la face 36 par un pion 40 qui se projette sensiblement perpendiculairement au plan de la base 35. La membrane clavier 28 comprend, en outre, des pions 41 qui se projettent depuis la face 36 sensiblement perpendiculairement à celle-ci et qui sont reliés à la base 35 par une lèvre périphérique amincie 42. La membrane clavier 28 comprend également des tétons 43 répartis sur la face 36 de la base 35. La longueur des pions 40, 41 n'est pas uniforme. Plus précisément, la longueur des pions 40, 41 croît avec l'épaisseur de la partie de l'entretoise 26 située à proximité des pions considérés. Dans le présent exemple de réalisation, la membrane clavier 28 comprend dix-neuf pions 40, huit pions 41 et dix tétons 43.

L'entretoise 26 est traversée par dix-neuf ouvertures cylindriques 44 destinées à recevoir les pions 40 de la membrane clavier 28 et huit ouvertures cylindriques 45, de même diamètre ou de diamètre inférieur aux ouvertures 44 et destinées à recevoir les pions 41. En outre, l'entretoise 26 est traversée par dix ouvertures cylindriques 46 de diamètre inférieur destinées à recevoir les tétons 43. Dans le présent exemple de réalisation, les ouvertures 44, 45, 46 sont d'axes perpendiculaires à la face 33 de l'entretoise 26. L'entretoise 26 comprend des ouvertures traversantes 49 destinées au passage d'éléments du lecteur 10, par exemple des moyens de fixation du boîtier 12. L'entretoise 26 comprend des évidements 50, 51 non traversants du côté de la face 34.

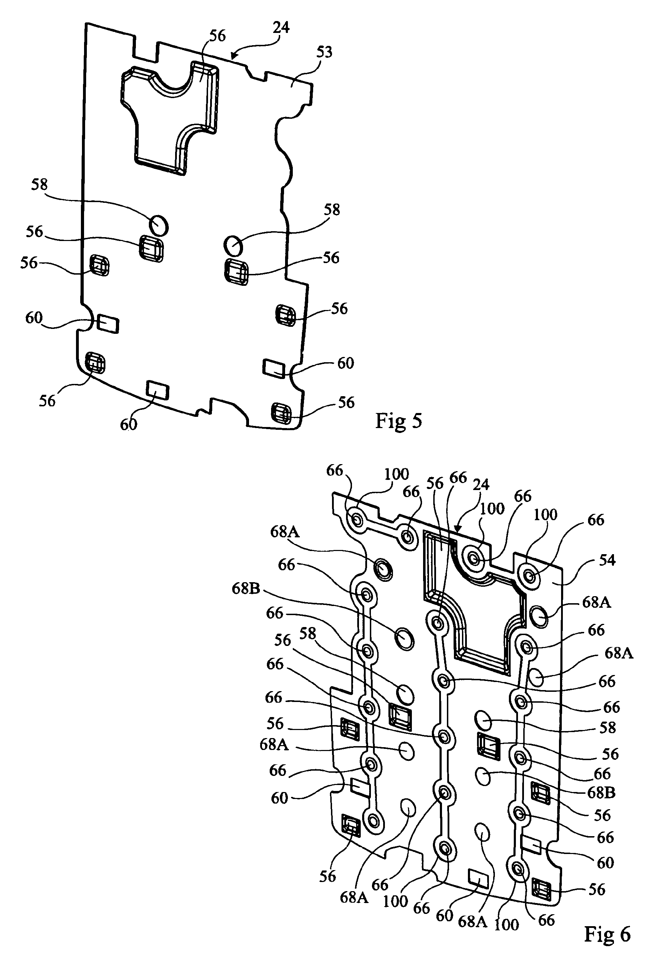

Les figures 5 et 6 représentent des vues en perspective plus détaillées du dispositif de protection 24. On désigne par la référence 53 la face du dispositif de protection 24 en contact avec l'entretoise 26 et par la référence 54 la face du dispositif de protection 24 recouvrant le circuit imprimé 22. La face 53 peut ne pas s'étendre sous la totalité de la face 33 de l'entretoise 26. En particulier, la forme du pourtour du dispositif de protection 24 peut permettre le passage de composants électroniques connectés à la face 23 du circuit imprimé 22.

Le dispositif de protection 24 a une structure élastique. Il est susceptible d'être déformé localement et adopte, en l'absence d'action extérieure, une forme générale plane à l'exception d'enfoncements 56 qui se projettent du côté de la face 53. Chaque enfoncement 56 est disposé au niveau de l'un des évidements 50 de l'entretoise 26 et peut avoir une forme sensiblement complémentaire de l'évidement 50 associé. Chaque enfoncement 56 peut être réalisé par déformation plastique du dispositif de protection 24. Des composants électroniques 57 peuvent être prévus sur le circuit imprimé 22 au niveau d'au moins certains des enfoncements 56 du dispositif de protection 24.

Des ouvertures traversantes 58, 60 peuvent être prévues dans le dispositif de protection 24. Plus précisément, chaque ouverture 58 est prévue sensiblement dans le prolongement de l'une des ouvertures 49 de l'entretoise 26 et est destinée à permettre le passage d'éléments du lecteur, par exemple des moyens de fixation des portions supérieure et inférieure de boîtier 14, 16. Les ouvertures 60 sont prévues sensiblement dans le prolongement des évidements 51 de l'entretoise 26 et sont destinées à permettre le passage de diodes électroluminescentes 61 connectées à la face 23 du circuit imprimé 22.

Le dispositif de protection 24 comprend, du côté de la face 54, des pastilles conductrices planes 66, par exemple en carbone, pour chacune des touches 20. Le dispositif de protection 24 comprend, en outre, du côté de la face 54, des éléments conducteurs 68A et 68B bombés, appelés dômes. Chaque dôme 68A, 68B est associé à un pion 41. Les dômes 68A et 68B ont des structures légèrement différentes comme cela sera décrit plus en détails par la suite.

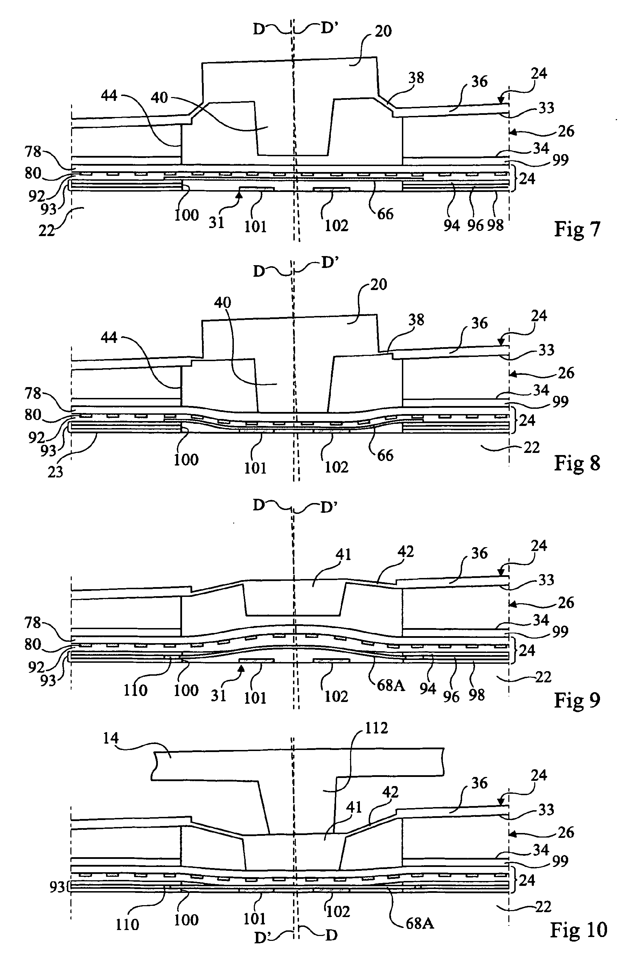

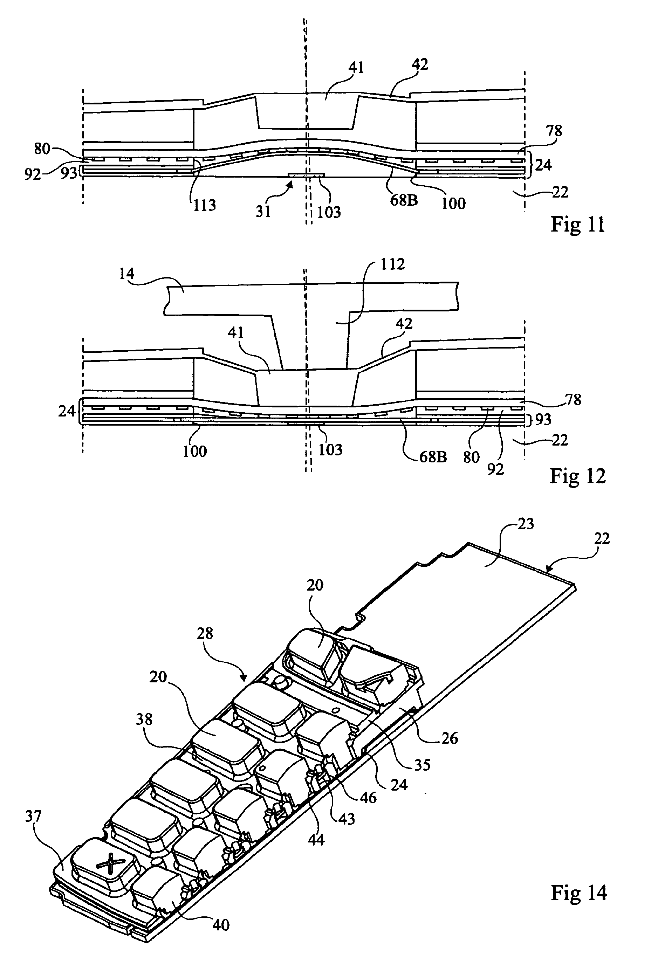

Les figures 7 à 12 représentent des coupes, partielles et schématiques, de l'empilement formé par le circuit imprimé 22, le dispositif de protection 24, l'entretoise 26 et la membrane clavier 28 au niveau d'une pastille de carbone 66, d'un dôme 68A et d'un dôme 68B. Sur ces figures, les rapports de dimensions ne sont pas conservés par rapport aux figures précédentes. Selon le présent exemple de réalisation, le dispositif de protection 24 est un circuit souple constitué d'un substrat 78 en matériau élastique, par exemple une résine thermoplastique telle que du polyéthylène téréphtalate (PET) ayant une épaisseur, par exemple de l'ordre de 0,1 mm. Une ou plusieurs pistes conductrices 80 sont formées sur le substrat 78 du côté du circuit imprimé 22. Les pistes 80 sont, par exemple, en encre argent et sont obtenues par sérigraphie. Les pistes 80 et le substrat 78 sont recouverts d'une couche de vernis 92, par exemple constituée d'un matériau diélectrique. Un empilement 93 de trois couches 94, 96 et 98, formant un intercalaire, recouvre la couche de vernis 92. L'intercalaire 93 a, par exemple, une épaisseur de l'ordre de 0,2 mm. L'intercalaire 93 peut ne pas être présent au niveau de chaque enfoncement 56. L'entretoise 26 peut être maintenue sur le dispositif de protection 24 par l'intermédiaire d'un matériau de collage 99. L'intercalaire 93 comprend une ouverture 100 au niveau de chaque interrupteur ou zone de contact d'alimentation 31. Pour les figures 7 à 10, on a représenté un interrupteur 31 par deux pistes conductrices disjointes 101, 102 formées sur le circuit imprimé 22 sensiblement au niveau de l'ouverture 100 de l'intercalaire 93 et, pour les figures 11 et 12, on a représenté une zone de contact d'alimentation 31 par une piste conductrice 103.

Les figures 7 et 8 sont des coupes réalisées au niveau d'une pastille conductrice 66 respectivement en l'absence d'action exercée sur la touche 20 et lorsque la touche 20 est enfoncée. La pastille de carbone 66 recouvre la couche de vernis 92 et l'ouverture 100 de l'intercalaire 93 expose au moins partiellement la pastille de carbone 66. Comme cela apparaît en figure 8, lorsqu'une pression est exercée sur la touche 20, la lèvre 38 se déforme pour permettre l'enfoncement de la touche selon un axe D sensiblement perpendiculaire à la face 33. Le pion 40 entraîne une déformation locale du dispositif de protection 24 selon l'axe D' perpendiculaire à la face 34 au niveau de l'ouverture 100 de l'intercalaire 93 de sorte que la pastille de carbone 66 vient au contact des pistes 101 et 102 et assure une connexion électrique entre celles-ci. Lorsqu'il n'y a plus de pression exercée sur la touche 20, le dispositif de protection 24 revient élastiquement en position de repos dans laquelle il adopte une configuration plane au niveau du pion 40, la pastille 66 étant alors séparée des pistes conductrices 101, 102.

Les figures 9 et 10 sont des coupes réalisées au niveau d'un dôme conducteur 68A respectivement en l'absence et en présence de la portion supérieure de boîtier 14. Le dôme 68A est une pièce métallique ayant, par exemple, une épaisseur de 0,05 mm correspondant, par exemple, à une portion de sphère ou d'ellipsoïde. Le dôme 68A est formé, par exemple, par déformation d'une plaque en acier ressort. Le bord périphérique du dôme 68A peut être situé dans un logement 110 prévu dans l'intercalaire 93. Lorsque la portion supérieure de boîtier 14 est mise en place, un doigt 112 prévu au niveau de la face interne de la portion supérieure de boîtier 14 vient en appui contre le pion 41 qui est déplacé et vient en appui contre le dôme 68A. Le dôme 68A se déforme pour venir au contact des pistes conductrices 101, 102, assurant un contact électrique entre celles-ci. L'état déformé du dôme 68A correspond à une position instable de celui-ci de sorte que, dès que l'action du doigt 112 sur le pion 41 cesse, le dôme 68A reprend sa forme bombée et rompt le contact électrique avec les pistes 101, 102.

La figure 11 est une vue analogue à la figure 9 au niveau d'un dôme 68B. Par rapport à ce qui a été décrit précédemment en relation avec la figure 9, la couche de vernis 92 comprend une ouverture 113 qui expose un ou plusieurs tronçons de la piste 80 sensiblement au niveau du dôme 68B. De ce fait, lorsque le circuit souple 24 et le dôme 68B sont déformés sous l'action du pion 41, le dôme 68B vient au contact, d'une part, de la piste 80 et, d'autre part, de la piste 103 du circuit imprimé 22. Un tel contact est utilisé pour assurer l'alimentation de la piste 80. L'état déformé du dôme 68B correspond à une position instable de celui-ci de sorte que, dès que l'action du doigt 112 sur le pion 41 cesse, le dôme 68B reprend sa forme bombée et rompt le contact électrique entre la piste 103 et la piste 80.

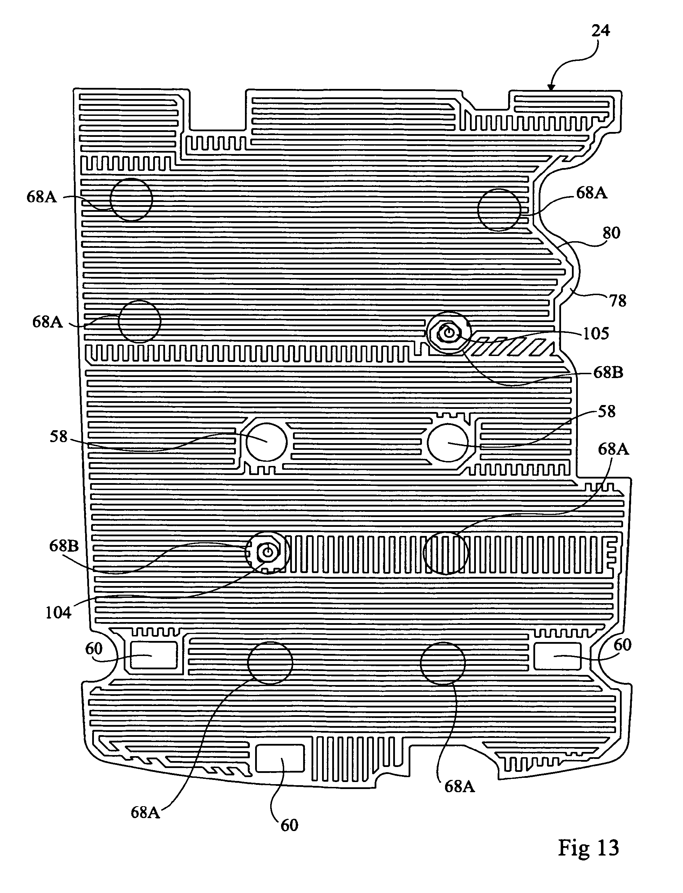

La figure 13 est une vue de dessous du dispositif de protection 24 représentant un exemple de répartition des pistes conductrices 80 sur le substrat 78. On a représenté par des cercles les dômes 68A et 68B. Dans le présent exemple, une piste unique 80 s'étend sur le substrat 78. La piste 80 comprend un premier plot d'extrémité 104 au niveau de l'un des dômes 68B et un second plot d'extrémité 105 au niveau de l'autre dôme 68B. La piste 80 s'étend en zigzaguant sensiblement sur toute la surface du dispositif de protection 24. En particulier, la piste 80 s'étend au niveau des dômes 68A et des pastilles conductrices 66, non représentées. La piste conductrice 80 s'étend également au niveau des enfoncements 56.

De préférence, le tronçon de la piste 80 que le dôme déformable 68B amène au contact d'une piste conductrice 103 du circuit 22 correspond à une extrémité de la piste 80. Ainsi, les deux extrémités de la piste 80 sont reliées à des portions conductrices de régions déformables (les dômes 68B) du dispositif de protection.

Bien que cela n'apparaisse pas clairement aux figures 11 et 12, la région conductrice déformable 68B n'est en contact qu'avec le point d'extrémité de la piste 80 par une ouverture au travers de la couche isolante 92. En effet, il n'est pas souhaitable que le contact court-circuite plusieurs tronçons car cela risque de rendre "aveugle" certaines zones du dispositif de protection et nuire alors à la fiabilité de la détection.

Pour éviter une alimentation pirate de la piste 80, les dômes 68B d'alimentation de la piste 80 (donc les plots d'extrémité 104 et 105) sont placés hors de la périphérie du dispositif de protection. Ainsi, la piste conductrice 80 protège non seulement contre une tentative d'intrusion au moyen d'une pointe ou analogue, mais également contre un déplacement du système. Les détections correspondantes sont effectuées par un ou plusieurs circuits électroniques adaptés, portés par le circuit imprimé.

La largeur de la piste conductrice 80 peut être variable mais reste de préférence très inférieure (de préférence avec un facteur supérieur à 5) au diamètre d'un dôme. Plus la piste 80 est étroite et plus les écarts entre les tronçons sont faibles, meilleure est la sensibilité du dispositif de détection. Par ailleurs, le tracé suivi par la piste 80 peut prendre différentes formes (serpentins, peignes, tronçons courbes, etc.). Dans le cas où plusieurs pistes 80 sont prévues, elles pourront être alimentées par de mêmes régions déformables du dispositif de protection et pistes correspondantes du circuit imprimé, ou être associées à des régions déformables différentes.

La figure 14 est une vue similaire à la figure 2 dans laquelle une coupe a été réalisée. Les tétons 43 de la membrane clavier 28 sont maintenus dans les ouvertures 46 correspondantes de l'entretoise 26 et assurent le maintien en position de la membrane clavier 28 par rapport à l'entretoise 26.

Le présent exemple de réalisation permet d'empêcher l'accès aux pistes métalliques 101, 102 du circuit imprimé 22 tout en conservant la fonction d'interrupteur des pions 40, 41.

Le présent exemple de réalisation permet de protéger certains composants électroniques 57 présents sur le circuit imprimé 22 contre une intrusion en encapsulant ces composants 57 par le dispositif de protection 24.

Dans le présent exemple de réalisation, les deux faces 33, 34 de l'entretoise 26 peuvent être inclinées l'une par rapport à l'autre et non pas parallèles. L'entretoise 26 permet d'incliner les axes de déplacements des touches 20 du clavier par rapport aux axes de déplacement des portions déformables du dispositif de protection 24. On peut donc orienter les touches 20 pour obtenir les mouvements les plus simples et naturels possibles pour un utilisateur.

Dans le présent exemple de réalisation, pour chaque touche 20, le dispositif de protection 24 est plan en l'absence d'action extérieure et est déformé pour assurer la liaison électrique entre la pastille conductrice 66 et les pistes conductrices 101, 102. La course du dispositif de protection 24 est de l'ordre de 1 mm. On privilégie alors la rapidité de commutation. Pour les pions 41, le dispositif de protection 24 a, en l'absence d'action extérieure, une forme bombée en raison de l'élément conducteur élastique 68A et est déformé pour assurer la liaison électrique entre l'élément conducteur 68A et les pistes conductrices 101, 102.

Des modes de réalisation particuliers de la présente invention ont été décrits. Diverses variantes et modifications apparaîtront à l'homme de l'art. En particulier, on pourrait associer aux touches 20 de la membrane clavier 28 la structure du dispositif de protection 24 représentée aux figures 9 et 10 dans laquelle le dispositif de protection 24 comprend un élément conducteur élastique 68A qui a une forme bombée en l'absence d'action extérieure. Dans ce cas, lorsqu'une pression est exercée sur la touche 20, le pion 40 prolongeant la touche 20 déforme l'élément conducteur 68A pour assurer la liaison électrique entre des pistes conductrices 101, 102 du circuit imprimé 22. En outre, on pourrait envisager un dispositif de protection dans lequel la membrane 28 servirait de substrat pour la piste 80, et où les pastilles conductrices 66 et les dômes 68A et 68B seraient directement placés sur la membrane 28. De plus, on pourrait réaliser la fonction élastique des dômes 68A et 68B par thermoformage du dispositif de protection 24 au droit des zones 31.

## Revendications

1. Système électronique (10) comprenant :
un circuit électronique (22) ayant une face (23) sur laquelle sont disposées au moins deux premières pistes conductrices (103) ;
un dispositif d'actionnement (112) incluant au moins un premier élément d'appui (41) ;
une entretoise (26) interposée entre le circuit électronique et le dispositif d'actionnement et comportant au moins une ouverture (45) recevant au moins partiellement l'élément d'appui ; et
un dispositif de protection (24) interposé entre le circuit électronique et l'entretoise, le système électronique étant **caractérisé en ce que** ledit dispositif de protection comporte au moins une deuxième piste conductrice (80) dont des extrémités sont respectivement reliées à des premières portions conductrices (68B) de premières régions déformables du dispositif de protection, chaque première portion étant apte à contacter l'une des premières pistes conductrices du circuit électronique pour alimenter électriquement la deuxième piste sous l'effet d'une déformation desdites premières régions.

2. Système selon la revendication 1, dans lequel lesdites premières régions déformables (68B) sont disposées hors de la périphérie du dispositif de protection (24).

3. Système selon la revendication 1 ou 2, dans lequel lesdites premières portions conductrices (68B) sont à distance des premières pistes conductrices (103) en l'absence d'action extérieure exercée sur la première région déformable, les premiers éléments d'appui (41) étant adaptés à déformer les premières régions déformables pour mettre en contact les premières portions conductrices avec les premières pistes conductrices, d'où il résulte une connexion des extrémités respectives de la deuxième piste (80) aux premières pistes conductrices.

4. Système selon l'une quelconque des revendications 1 à 3, dans lequel le dispositif de protection (24) comprend une zone (56) déformée, le circuit électronique (22) comprenant des composants électroniques (57) recouverts par ladite zone, la deuxième piste conductrice (80) s'étendant au niveau de ladite zone.

5. Système selon l'une quelconque des revendications 1 à 4, dans lequel le dispositif de protection comporte en outre au moins une deuxième portion conductrice (66, 68A) portée par une deuxième région déformable et séparée de la deuxième piste conductrice (80) par une région isolante (92), la deuxième portion conductrice étant, en l'absence d'action extérieure exercée sur la deuxième région déformable, à distance des troisième et quatrième pistes conductrices (101, 102) portées par le circuit électronique (22), au moins un deuxième élément d'appui (40) étant adapté à déformer la deuxième région déformable pour mettre en contact la deuxième portion conductrice avec les troisième et quatrième pistes conductrices, d'où il résulte une liaison électrique entre les troisième et quatrième pistes conductrices.

6. Système selon l'une quelconque des revendications 1 à 5, dans lequel le dispositif de protection (24) comprend un empilement de premier, deuxième et troisième films isolants (78, 92, 93), la deuxième piste conductrice (80) étant disposée entre les premier et deuxième film isolants, le troisième film étant en contact avec le circuit électronique (22) et comprenant des ouvertures (100) au moins en vis-à-vis des premières pistes conductrices (101, 102, 103) et dégageant les portions conductrices (66, 68A, 68B).

7. Système selon l'une quelconque des revendications 1 à 6, dans lequel l'entretoise (26) est constituée d'un matériau adapté à diffuser la lumière, dans lequel l'entretoise comprend une première face (33) du côté du dispositif d'actionnement (28) et une seconde face (34) du côté du circuit électronique (22), dans lequel le circuit électronique (22) comprend au moins une source lumineuse (61), et dans lequel l'entretoise comprend un évidemment (51) non traversant du côté de la seconde face et contenant ladite source lumineuse.

8. Système selon l'une quelconque des revendications 1 à 7, dans lequel l'entretoise (26) comprend une première face plane (33) du côté du dispositif d'actionnement (28) et une seconde face plane (34) du côté du circuit électronique (22), la première face étant inclinée par rapport à la seconde face d'un angle compris entre 1° et 20°.

9. Système selon la revendication 5, dans lequel le dispositif d'actionnement comprend une membrane (28) recouvrant l'entretoise (26), la membrane comprenant au moins une touche (20) mobile par rapport au circuit électronique (22), susceptible d'être déplacée par un utilisateur et se prolongeant par un des deuxièmes éléments d'appui (40).

10. Système selon l'une quelconque des revendications 1 à 9, dans lequel le dispositif d'actionnement comprend un boîtier (12) contenant le circuit électronique (22), l'entretoise (26) et le dispositif de protection (24), le boîtier comprenant une face interne et une portion (112) se projetant depuis la face interne et étant adapté à maintenir les premiers éléments d'appui (41) contre les premières régions déformables du dispositif de protection lorsque le boîtier est fermé.

## Patentansprüche

1. Ein elektronisches System (10), das Folgendes aufweist:
einen elektronischen Schaltkreis (22) mit einer Oberfläche (23) auf der wenigstens zwei erste Leiterbahnen (103) angeordnet sind;
eine Betätigungseinrichtung (112), die wenigstens ein erstes Lagerelement (41) aufweist;
einen Abstandshalter (26), der zwischen den elektronischen Schaltkreis und die Betätigungseinrichtung eingefügt ist und der wenigstens eine Öffnung (45) aufweist, die wenigstens teilweise das Lagerelement aufnimmt; und
eine Schutzeinrichtung (24), die zwischen den elektronischen Schaltkreis und den Abstandshalter eingefügt ist, wobei der elektronische Schaltkreis **dadurch gekennzeichnet ist, dass** die Schutzeinrichtung wenigstens eine zweite Leiterbahn (80) aufweist mit Enden, die entsprechend mit ersten Leitungsteilen (68B) von ersten deformierbaren Bereichen der Schutzeinrichtung verbunden sind, wobei jedes erste Teil geeignet ist eine der ersten Leiterbahnen des elektronischen Schaltkreises zu kontaktieren, um elektrisch die zweite Leiterbahn zu versorgen mit dem Effekt, dass eine Deformation der ersten Bereiche erfolgt.

2. Das System nach Anspruch 1, wobei die ersten deformierbaren Bereiche (68B) außerhalb des Umfangs der Schutzeinrichtung (24) angeordnet sind.

3. Das System nach einem der Ansprüche 1 oder 2, wobei die ersten leitenden Teile (68B) getrennt von den ersten Leiterbahnen (103) sind in der Abwesenheit einer externen Aktion, die auf den ersten deformierbaren Bereich angewendet wird, wobei das erste Lagerelement (41) geeignet ist die ersten deformierbaren Bereiche zu deformieren, um die ersten leitenden Teile mit den ersten Leiterbahnen in Kontakt zu bringen, wobei die entsprechenden Enden der zweiten Leiterbahn (80) mit den ersten Leiterbahnen verbunden sind.

4. Das System nach einem der Ansprüche 1 bis 3, wobei die Schutzeinrichtung (24) einen deformierten Bereich (56) aufweist, wobei der elektronische Schaltkreis (22) elektronische Komponenten (57) aufweist die durch diesen Bereich abgedeckt sind, wobei zweite Leiterbahn (80) sich auf die Höhe dieses Bereichs erstreckt.

5. Das System nach einem der Ansprüche 1 bis 4, wobei die Schutzeinrichtung ferner wenigstens einen zweiten leitenden Teil (66, 68A) aufweist, der von einem zweiten deformierbaren Bereich getragen wird und getrennt ist von der zweiten Leiterbahn (80) durch einen Isolierbereich (92), wobei der zweite leitende Teil, in der Abwesenheit einer externen Aktion, die auf den zweiten deformierbaren Bereich angewendet wird, getrennt ist von der dritten und vierten Leiterbahn (101, 102), die von dem elektronischen Schaltkreis (22) versorgt werden, wenigstens ein zweites Lagerelement (40) aufweist, das geeignet ist den zweiten deformierbaren Bereich zu deformieren, um den zweiten leitenden Teil mit der dritten und der vierten Leiterbahn in Kontakt zu bringen, wobei die dritte und die vierte Leiterbahn elektrisch miteinander verbunden sind.

6. Das System nach einem der Ansprüche 1 bis 5, wobei die Schutzeinrichtung (24) einen Stapel von ersten, zweiten und dritten Isolierfilmen (78, 92, 93) aufweist, wobei die zweite Leiterbahn (80) zwischen dem ersten und dem zweiten Isolierfilm angeordnet ist, wobei der dritte Film in Kontakt mit dem elektronischen Schaltkreis (22) ist und Öffnungen (100) wenigstens vor den ersten Leiterbahnen (101, 102, 103) aufweist, um die leitenden Teile (66, 68A, 68B) zugänglich zu machen.

7. Das System nach einem der Ansprüche 1 bis 6, wobei der Abstandshalter (26) aus einem Material geformt ist, das geeignet ist Licht zu streuen, wobei der Abstandshalter eine erste Oberfläche (33) auf der Seite der Betätigungseinrichtung (28) aufweist, und eine zweite Oberfläche (34) auf der Seite des elektronischen Schaltkreises (22) aufweist, wobei der elektronische Schaltkreis (22) wenigstens eine Lichtquelle (61) aufweist, und wobei der Abstandshalter eine nicht durchgehende Aushöhlung (51) auf der Seite der zweiten Oberfläche aufweist, die die Lichtquelle enthält.

8. Das System nach einem der Ansprüche 1 bis 7, wobei der Abstandshalter (26) eine erste ebene Oberfläche (33) auf der Seite der Betätigungseinrichtung (28) aufweist und einen zweite ebene Oberfläche (34) auf der Seite des elektronischen Schaltkreises (22) aufweist, wobei die erste Oberfläche gegenüber der zweiten Oberfläche geneigt ist mit einem Winkel im Bereich zwischen 1° und 20°.

9. Das System nach Anspruch 5, wobei die Betätigungseinrichtung eine Membran (28) aufweist, die den Abstandshalter (26) abdeckt, wobei die Membran wenigstens eine Taste (20) aufweist, die bezüglich des elektronischen Schaltkreises (22) beweglich ist und geeignet ist, durch einen Benutzer versetzt zu werden und sich in eines der zwei Lagerelemente (40) erstreckt.

10. Das System nach einem der Ansprüche 1 bis 9, wobei die Betätigungseinrichtung ein Gehäuse (12) aufweist, das den elektronischen Schalkreis (22), den Abstandshalter (26), und die Schutzeinrichtung (24) aufweist, wobei das Gehäuse eine innen liegende Oberfläche und einen Teil (112) aufweist, der von der innen liegenden Oberfläche hervorragt und geeignet ist, die ersten Lagerelemente (41) gegen die ersten deformierbaren Bereiche der Schutzeinrichtung zu halten, wenn das Gehäuse geschlossen ist.

## Claims

1. An electronic system (10) comprising:
an electronic circuit (22) having a surface (23) on which at least two first conductive tracks (103) are arranged;
an actuation device (112) comprising at least one first bearing element (41);
a spacer (26) interposed between the electronic circuit and the actuation device and comprising at least one opening (45) at least partially receiving the bearing element; and
a protection device (24) interposed between the electronic circuit and the spacer, the electronic system being **characterized in that** the protection device comprises at least one second conductive track (80) having ends respectively connected to first conductive portions (68B) of first deformable regions of the protection device, each first portion being capable of contacting one of the first conductive tracks of the electronic circuit to electrically supply the second track under the effect of a deformation of said first regions.

2. The system of claim 1, wherein said first deformable regions (68B) are arranged outside of the periphery of the protection device (24).

3. The system of claim 1 or 2, wherein said first conductive portions (68B) are distant from the first conductive tracks (103) in the absence of an external action exerted on the first deformable region, the first bearing elements (41) being capable of deforming the first deformable regions to put the first conductive portions in contact with the first conductive tracks, whereby the respective ends of the second track (80) are connected to the first conductive tracks.

4. The system of any of claims 1 to 3, wherein the protection device (24) comprises a deformed area (56), the electronic circuit (22) comprising electronic components (57) covered by said area, the second conductive track (80) extending at the level of said area.

5. The system of any of claims 1 to 4, wherein the protection device further comprises at least one second conductive portion (66, 68A) supported by a second deformable region and separated from the second conductive track (80) by an insulating region (92), the second conductive portion being, in the absence of an external action exerted on the second deformable region, distant from the third and fourth conductive tracks (101, 102) supported by the electronic circuit (22), at least one second bearing element (40) being capable of deforming the second deformable region to put the second conductive portion in contact with the third and fourth conductive tracks, whereby the third and fourth conductive tracks are electrically connected.

6. The system of any of claims 1 to 5, wherein the protection device (24) comprises a stack of first, second, and third insulating films (78, 92, 93), the second conductive track (80) being arranged between the first and second insulating films, the third film being in contact with the electronic circuit (22) and comprising openings (100) at least in front of the first conductive tracks (101, 102, 103), exposing the conductive portions (66, 68A, 68B).

7. The system of any of claims 1 to 6, wherein the spacer (26) is formed of a material capable of diffusing light, wherein the spacer comprises a first surface (33) on the side of the actuation device (28) and a second surface (34) on the side of the electronic circuit (22), wherein the electronic circuit (22) comprises at least one light source (61), and wherein the spacer comprises a non-through recess (51) on the side of the second surface, containing said light source.

8. The system of any of claims 1 to 7, wherein the spacer (26) comprises a first planar surface (33) on the side of the actuation device (28) and a second planar surface (34) on the side of the electronic circuit (22), the first surface being tilted with respect to the second surface by an angle ranging between 1° and 20°.

9. The system of claim 5, wherein the actuation device comprises a membrane (28) covering the spacer (26), the membrane comprising at least one key (20) which is mobile with respect to the electronic circuit (22), capable of being displaced by a user and extending in one of the second bearing elements (40).

10. The system of any of claims 1 to 9, wherein the actuation device comprises a package (12) containing the electronic circuit (22), the spacer (26), and the protection device (24), the package comprising an internal surface and a portion (112) projecting from the internal surface and being capable of holding the first bearing elements (41) against the first deformable regions of the protection device when the package is closed.
